**Europäisches Patentamt**

**European Patent Office**

**Office européen des brevets**

(19)

(11) Veröffentlichungsnummer: **0 201 843 B1**

## EUROPÄISCHE PATENTSCHRIFT

(12)

(45) Veröffentlichungstag der Patentschrift: **07.08.91**

(51) Int. Cl.⁵: **B60T 8/00**, B60Q 9/00, G01N 19/02

(21) Anmeldenummer: **86106168.7**

(22) Anmeldetag: **06.05.86**

(54) **Verfahren zum Ermitteln des Reibungskoeffizienten zwischen Reifen und Fahrbahn.**

(30) Priorität: **07.05.85 DE 3516399**
**24.09.85 DE 3534022**

(43) Veröffentlichungstag der Anmeldung:
**20.11.86 Patentblatt 86/47**

(45) Bekanntmachung des Hinweises auf die
Patenterteilung:
**07.08.91 Patentblatt 91/32**

(84) Benannte Vertragsstaaten:
**DE FR GB IT**

(56) Entgegenhaltungen:
**DE-A- 2 225 771**
**DE-A- 2 748 863**
**DE-A- 2 947 259**
**DE-B- 1 959 734**

**Fachbuch Fahrzeugtechnik, P. Koessler"Fahrzeugtechnik", S. 561, 1971, Rowohlt
Verlag, Hamburg**

(73) Patentinhaber: **LUCAS INDUSTRIES public limited company**
**Great King Street**
**Birmingham, B19 2XF West Midlands(GB)**

(72) Erfinder: **Rath, Heinrich-Bernhard**
**Sebastian-Kneipp-Strasse 73a**
**W-5414 Vallendar(DE)**

(74) Vertreter: **Wuesthoff, Franz, Dr.-Ing. et al
Wuesthoff & Wuesthoff Patent- und Rechtsanwälte Schweigerstrasse 2
W-8000 München 90(DE)**

## Beschreibung

Die Erfindung betrifft ein Verfahren zum Ermitteln des Reibungskoeffizienten zwischen einem Reifen eines Fahrzeuges und der Fahrbahn gemäß den Oberbegriffen der Patentansprüche 1, 14 und 18.

In der DE-A 29 47 259 wird vorgeschlagen, ein Rad mit einem konstanten Bremsdruck abzubremsen, während ein anderes Rad frei läuft. Aus der Drehzahldifferenz dieser beiden Räder wird der Reibbeiwert ermittelt. Dort werden aber nicht die eigentlichen Fahrzeugräder für die Messung herangezogen, sondern es ist eine gesonderte Schwenkvorrichtung vorgesehen, mit der ein Meßrad auf die Fahrbahn abgesenkt wird. Dieses gesonderte Rad wird nicht von der eigentlichen Bremsanlage des Fahrzeuges gebremst sondern vielmehr in einfacher Weise mit einer konstanten Kraft abgebremst.

Bei einer aus der DE-A 31 19 153 bekannten Anordnung wird den Bremsen zur Ermittlung des Haftbeiwertes einer Fahrbahn automatisch mittels einer zu anderen Zwecken ohnehin vorgesehenen Antiblockieranlage ein ansteigender Testdruck zugeführt und bei Erreichen eines vorbestimmten Schlupfwertes unterhalb eines vorgegebenen Testdruckwertes wird ein Warn-Signal abgegeben. Bei der aus der DE-A 31 19 153 bekannten Anordnung wird der Haftbeiwert der Fahrbahn nur mit einem vorgegebenen Wert verglichen und die Anzeige informiert den Fahrer darüber, ob der Haftbeiwert größer oder kleiner als der vorgegebene Wert ist. Eine kontinuierliche Messung und Anzeige des Meßergebnisses erfolgt nicht.

Der Erfindung liegt die Aufgabe zugrunde, das eingangs genannte Verfahren derart weiterzubilden, daß der Reibungskoeffizient zwischen den Reifen und der Fahrbahn in einfacher Weise genau gemessen und der tatsächliche Wert des Reibungskoeffizienten dem Fahrer mitgeteilt werden kann.

Erfindungsgemäße Lösungen dieser Aufgabe sind in den Ansprüchen 1, 14 und 18 gekennzeichnet.

Vorteilhafte Ausgestaltungen der Erfindung sind in den abhängigen Ansprüchen beschrieben.

Die Dosierung des Bremsdruckes für das einzelne Rad ist dabei so bemessen, daß die Geradeausfahrt des Fahrzeuges nicht beeinträchtigt ist. Insbesondere kann dabei der Bremsdruck und/oder die Brems-Zeitspanne automatisch als Funktion der Geschwindigkeit variiert werden.

Bevorzugt werden nacheinander die beiden nicht angetriebenen Räder des Fahrzeuges einzeln abgebremst und die reduzierte Drehgeschwindigkeit des abgebremsten Rades wird mit der des nicht abgebremsten Rades verglichen. Durch die selektive Abbremsung einzelner Räder ist es möglich, unterschiedliche Bereiche der Fahrbahn auf ihren Haftbeiwert zu untersuchen. Dem Fahrer wird der schlechtere der beiden Haftbeiwerte mitgeteilt. Auch kann dem Fahrer angezeigt werden, ob sich die an den beiden nicht angetriebenen Rädern ermittelten Reibungskoeffizienten um mehr als einen vorgegebenen Wert unterscheiden oder es können auch beide Meßergebnisse (Reibungskoeffizienten) getrennt angezeigt werden.

Der Wert des Reibungskoeffizienten kann genau bestimmt werden. Hierzu wird das Bremsmoment aus dem Produkt aus Bremsdruck, Kolbenfläche der Bremszange, Reibwert des Belages und Rad-Radius bestimmt. Der Bremsdruck am gebremsten Rad wird direkt gemessen. Die Kolbenfläche der Bremszange ist eine Konstante. Der Reibwert des Belages ist temperaturabhängig, weshalb in einer bevorzugten Ausgestaltung der Erfindung dessen Temperatur gemessen wird. Ohne eine Bestimmung der Temperatur des Belages kann auch ein unterer Mittelwert für den Reibwert angesetzt werden. Der Rad-Radius ist wiederum eine Konstante.

Um die volle Seitenführungskraft aller Räder in einer Kurve zu behalten, ist in einer bevorzugten Ausführungsform ein Lenkwinkelschalter angebracht, der ein Einschalten des Meßsystems bei eingeschlagener Lenkung (Kurvenfahrt) verhindert.

Der zu ermittelnde Reibungskoeffizient ist bei einem gegebenen Bremsmoment dem Schlupf des gebremsten Rades umgekehrt proportional. Der Schlupf wird derart ermittelt, daß die Drehgeschwindigkeiten des gebremsten sowie des ungebremsten Rades gemessen werden. Der Schlupf ergibt sich dann aus dem Quotienten aus der Differenz der beiden Drehgeschwindigkeiten und der Drehgeschwindigkeit des freien, ungebremsten Rades.

In einer bevorzugten Ausgestaltung der Erfindung wird aus dem oder den Reibungskoeffizienten und der momentanen Fahrzeuggeschwindigkeit ein maximaler Bremsweg ermittelt und angezeigt.

In einer weiteren bevorzugten Ausführungsform wird der so ermittelte Bremsweg in einer an sich bekannten Radarabstandswarnanzeige aufgearbeitet und dem Fahrer wird angezeigt, ob der ermittelte Bremsweg bei der gefahrenen Geschwindigkeit ausreicht, um hinter dem vorherfahrenden Fahrzeug, dessen Geschwindigkeit durch die Radarabstandswarnanzeige ermittelt wurde, zum Stehen zu kommen, falls dieses Fahrzeug ebenfalls maximal abgebremst wird.

Die Ermittlung des Reibungskoeffizienten erfolgt entweder durch Betätigung einer Start-Taste seitens des Fahrers oder aber wahlweise in regelmäßigen Abständen automatisch.

Auch kann der ermittelte Reibungskoeffizient in Beziehung zur momentanen Fahrzeuggeschwindigkeit gesetzt werden. Bei Unterschreiten eines vorgegebenen Grenzwertes des Quotienten wird ein Warnsignal abgegeben, das dem Fahrer anzeigt, daß der Bremsweg eine vorgegebene, geschwindigkeitsabhängige Strecke überschreitet.

Das erfindungsgemäße Verfahren läßt sich bei einem Fahrzeug mit Antiblockiersystem mit wenig Aufwand durchführen, da dessen Pumpe oder Druckspeicher und Druck-Schaltventile für die einzelnen Räder verwendet werden können.

Bei den vorstehenden Verfahren zum Ermitteln des Reibungskoeffizienten zwischen Reifen und Fahrbahn kann unter bestimmten Umständen der Fahrer durch die Messung etwas irritiert werden, insbesondere dann, wenn die Messung unwillkürlich erfolgt, d.h. nicht vom Fahrer bewußt eingeleitet wird.

Bei einer zusätzlichen Variante der Erfindung sollen deshalb der Fahrer oder andere Fahrzeuginsassen nicht durch den Meßvorgang irritiert werden und es soll auch die Fahrt des Fahrzeuges durch die Messung nicht beeinträchtigt werden.

Gemäß einer Variante der Erfindung (Anspruch 14) ist deshalb vorgesehen, daß während einer normalen Fahrzeug-Bremsung eines der Fahrzeugräder mit einem geringeren Bremsdruck beaufschlagt wird als ein anderes Fahrzeugrad.

Es erfolgt also die Reibungskoeffizientenmessung nicht während einer ungestörten Geradeausfahrt des Fahrzeuges, sondern nur während einer normalen Fahrzeug-Bremsung. In diesem Fall nimmt der Fahrer die Messung kaum oder gar nicht wahr.

In einer anderen erfindungsgemäßen Lösung der vorstehend genannten Aufgabe ist vorgesehen, daß für die Reibungskoeffizientenmessung die Achslast eines Fahrzeug-Rades vermindert wird, daß dieses entlastete Rad abgebremst wird und daß dessen Drehgeschwindigkeit mit der Drehgeschwindigkeit zumindest eines anderen, ungebremsten Rades verglichen wird.

Das vorstehende erfindungsgemäße Verfahren wird in der Regel nicht bei einer normalen Fahrzeugbremsung durchgeführt, sondern kann vielmehr auch bei ncrmaler Geradeausfahrt des Fahrzeuges angewandt werden, da das den Fahrer evtl. irritierende Rucken im Fahrzeug dadurch vermieden wird, daß die Reibung zwischen dem Meß-Rad und der Fahrbahn durch Anheben dieses Rades reduziert wird.

Es sind Kraftfahrzeuge bekannt, die aus anderen, nicht mit der Bremstechnik zusammenhängenden Gründen, die Möglichkeit haben, die Höhe eines Rades im Vergleich mit den anderen Rädern zu verändern. Die Erfindung läßt sich besonders vorteilhaft und preisgünstig bei derartigen Fahrzeugen einsetzen.

Um eine Messung im Falle einer Panik-Bremsung zu verhindern, ist in einer bevorzugten Ausgestaltung der Erfindung bei allen Varianten vorgesehen, daß nur dann eines der Fahrzeug-Räder mit geringerem Bremsdruck beaufschlagt bzw. seine Achslast vermindert wird, wenn der Druck des Hauptbremszylinders einen vorgegebenen Wert, wie z.B. 40 bar, innerhalb einer vorgegebenen Zeitspanne, wie z.B. einer Sekunde, nicht überschreitet.

Weitere vorteilhafte Weiterbildungen des Erfindungsgedankens sind in den Unteransprüchen beschrieben.

Der Reibungskoeffizient wird bei allen erfindungsgemäßen Lösungsvarianten aus dem Schlupf des abgebremsten Rades durch Vergleich der Drehgeschwindigkeiten gewonnen. Dabei kann bei allen Lösungsvarianten der Erfindung zur Ermittlung des Reibungskoeffizienten das am abgebremsten Rad herrschende Bremsmoment, die Radlast und der aus dem Vergleich der Drehgeschwindigkeiten der gebremsten und ungebremsten Räder gewonnene Schlupf des gebremsten Rades berücksichtigt werden. In jedem Falle kann die Ermittlung des Reibungskoeffizienten davon abhängig gemacht werden, ob der Fahrer willkürlich eine StartTaste bzw. eine Freigabe-Taste betätigt hat.

Nachfolgend sind Ausführungsbeispiele der Erfindung anhand der Zeichnung näher beschrieben. Es zeigt:

Fig. 1     ein Block-Schaltbild einer Vorrichtung zur Durchführung des erfindungsgemäßen Verfahrens;

Fig. 2     eine Vorrichtung zur Entlastung eines Fahrzeug-Rades;

Fig. 3     ein weiteres Ausführungsbeispiel einer Vorrichtung, mit der ein einzelnes Fahrzeug-Rad hinsichtlich seiner Achslast entlastet werden kann; und

Fig. 4     ein weiteres Block-Schaltbild einer Vorrichtung, mit der während einer normalen Fahrzeug-Bremsung ein Rad mit einem bestimmten Schlupf abgebremst werden kann.

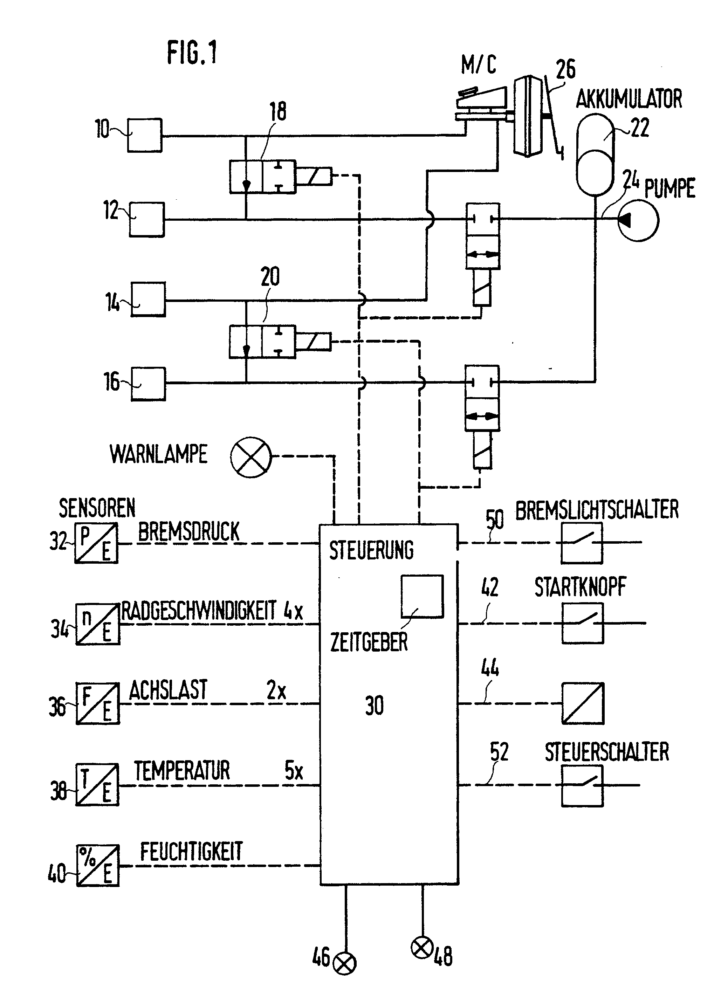

Gemäß Fig. 1 werden Bremsen 10 (vorne, links), 12 (hinten, rechts), 14 (vorne, rechts) und 16 (hinten, links) über Schaltventile 18, 20 mit Druck aus einem Druckspeicher 22 beaufschlagt. Der Druckspeicher 22 gehört zu einem (nicht gezeigten) Antiblockiersystem, dessen Steuergerät über die Druckleitung 24 angeschlossen ist (s. z.B. DE-OS 31 19 153).

Das Bremspedal 26 ist in bekannter Weise mit den Schaltventilen 18, 20 sowie dem Antiblockiersystem verbunden.

Ein Prozessor 30 verarbeitet Meßergebnisse und steuert die Schaltventile 18, 20 für die einzelnen

3

Bremsen 10-16.

Drucksensoren 32 ermitteln den Bremsdruck, insbesondere im gerade zur Ermittlung des Reibungskoeffizienten abgebremsten Rad. Das Meßergebnis wird in den Prozessor 30 eingegeben, welcher daraus in der eingangs angegebenen Weise das Bremsmoment berechnet. Gegebenenfalls wird hierfür auch die Temperatur der Reibbeläge mittels der Temperatur-Meßgeräte 38 gemessen.

Weiterhin wird die Außentemperatur abgefragt und bei bestimmten kritischen Temperaturen, z.B. geringer als +1°C, kann die Meßeinrichtung automatisch eingeschaltet werden.

Mittels der Radgeschwindigkeitssensoren 34 wird der Schlupf des gerade abgebremsten Rades durch Vergleich von dessen Radgeschwindigkeit mit der eines nicht abgebremsten Rades ermittelt. Der Schlupf ergibt sich aus der Formel:

$$\frac{V_{freies\ Rad} - V_{gebremstes\ Rad}}{V_{freies\ Rad}}$$

Der Reibungskoeffizient ist bei gegebenem Bremsmoment, welches in der eingangs angegebenen Weise gemessen bzw. berechnet wird, und bei gegebener Achslast, welche mittels des Achslast-Meßgerätes 36 ermittelt und in den Prozessor 30 eingegeben wird, dem gemessenen Schlupf umgekehrt proportional. Die exakten funktionalen Zusammenhänge können experimentell ermittelt werden, so daß der Prozessor 30 mit den experimentellen Daten programmiert werden kann.

Feuchtigkeitsmeßgeräte 40 ermitteln die Luftfeuchtigkeit im Bereich des Rades und können bei Erreichen einer bestimmten Feuchtigkeit, z.B. 90%, das Meßprogramm automatisch in bestimmten Zeitintervallen abrufen.

Über eine vom Fahrer zu betätigende Starttaste, welche über die Leitung 42 mit dem Prozessor 30 verbunden ist, wird die Meß-Routine ausgelöst.

Die Leitung 50 führt zu den Bremslichtern oder dem Bremslichtschalter, um ein Einschalten der Meßeinrichtung zu verhindern, wenn die Betriebsbremse betätigt wird.

Mit dem Bezugszeichen 44 ist eine Leitung für Zusatzgeräte angedeutet. Als Zusatzgerät kann eine Anzeige-Einrichtung für den momentanen, durch den Reibungskoeffizienten und die Geschwindigkeit definierten Bremsweg vorgesehen sein.

Als Zusatzgerät kann auch eine Radarwarnanzeige angeschlossen sein (DE-OS 26 55 619), die bei Unterschreiten eines gefährlichen Reibungskoeffizienten und Unterschreiten eines gewissen Mindestabstandes eine Zwangsbremsung auslöst.

Als Eingang 52 ist ein Lenkwinkelschalter vorgesehen, der das Einschalten der Meßeinrichtung verhindert, wenn ein bestimmter Lenkwinkeleinschlag überschritten wird.

Eine Warnsignal-Anzeigeeinrichtung 46 leuchtet auf und/oder gibt ein Tonsignal ab, wenn der erfindungsgemäß ermittelte Reibungskoeffizient in Abhängigkeit von der momentanen Fahrzeuggeschwindigkeit einen vorgegebenen Grenzwert unterschreitet. Daneben wird der gemessene Reibungskoeffizient direkt und kontinuierlich über die Reibungskoeffizienten-Anzeigeeinrichtung 48 mitgeteilt. Es ist auch möglich, eine digitale Anzeigeeinrichtung 48 nicht in Einheiten des Reibungskoeffizienten, sondern in Einheiten des Bremsweges zu eichen.

Mit der Schaltung gemäß Fig. 1 lassen sich gemäß einem anderen Ausführungsbeispiel der Erfindung die Ventile so schalten, daß während einer normalen Betriebsbremsung ein nicht angetriebenes Rad durch eines der Ventile 18 oder 20 vom Hauptbremszylinderdruck abgeschaltet wird, worauf anschließend eines der nicht angetriebenen Räder durch Druck aus der Druckquelle 22 oder 24 (Akkumulator oder Pumpe) so lange beaufschlagt wird, bis es einen bestimmten Schlupf erreicht hat. Durch Zuordnung des dafür erforderlichen Druckes unter Berücksichtigung der Achslast kann in der oben wiedergegebenen Weise der Reibungskoeffizient bestimmt werden. Als Vergleichsgeschwindigkeit für das mit dem bestimmten Schlupf laufende Fahrzeug-Rad wird das zweite, nicht angetriebene Fahrzeug-Rad herangezogen, welches ebenfalls vom Hauptbremszylinder abgetrennt und druckentlastet wurde. Es kann auch durch die anderen, mit geringem Druck abgebremsten Räder eine Bezugsgeschwindigkeit gebildet werden, die als Vergleichsgröße herangezogen wird.

Damit während einer Panikbremsung die Messung unterdrückt wird, kann ein Zeitglied vorgesehen sein, das die Messung nur zuläßt, wenn innerhalb der ersten Sekunde der Bremsbetätigung z.B. 40 bar nicht überschritten werden.

EP 0 201 843 B1

Der wie vorstehend ermittelte Reibungskoeffizient kann abgespeichert und zur Berechnung des momentanen Bremsweges für eine Bremsweganzeige oder auch eine Abstands-Warnanzeige herangezogen werden.

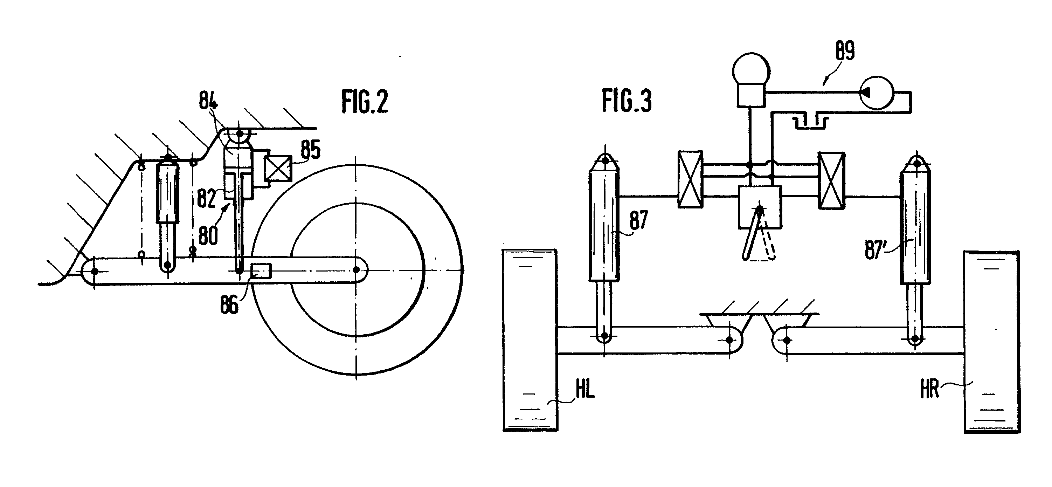

Fig. 2 illustriert ein anderes Verfahren zum Ermitteln des Reibungskoeffizienten zwischen Reifen und Fahrbahn, bei dem ebenfalls die Beeinträchtigung der Fahrt des Fahrzeuges und somit eine mögliche Irritierung der Fahrzeuginsassen auf ein Minimum reduziert sind.

Gemäß Fig. 2 wird bei einem Fahrzeug mit Längslenker ein Hubzylinder 80 vorgesehen, der während des normalen Fahrbetriebes drucklos ist und bei dem zwischen zwei Kammern 82 und 84 eine leitende Verbindung besteht. Vor einer Messung des Reibungskoeffizienten wird die Kammer 82 mit Druckflüssigkeit aus einem nicht gezeigten Speicher beaufschlagt und das Ventil 85 zwischen den Kammern geschlossen, während die Kammer 84 mit einem Reservoir verbunden ist. Sobald die vorgegebene, vom Last-Sensor 86 ermittelte Radlast erreicht ist, wird die Messung des Reibungskoeffizienten eingeleitet. Hierzu wird das in der vorstehend beschriebenen Weise gelüftete Rad, welches selbstverständlich weiterhin Bodenkontakt hat, abgebremst und es werden die Drehgeschwindigkeiten mit den nicht gebremsten Rädern wie oben angegeben verglichen.

Für die Messung des Reibungskoeffizienten ist nur eine sehr kurze Zeitspanne erforderlich, so daß durch das Anheben bzw. das Entlasten des Rades das Fahrverhalten des Fahrzeuges kaum beeinflußt wird. In einer Kurve werden derartige Messungen unterdrückt. Hierzu ist beispielsweise ein Lenkrad-Sensor vorgesehen. Auch können z.B. die Achslasten verglichen werden.

Fig. 3 zeigt ein Fahrzeug mit hydropneumatischer Federung, bei dem die Entlastung des für die Messung herangezogenen Rades dadurch erreicht wird, daß der Druck auf der einen Aufhängungsseite erhöht wird, so daß die andere Aufhängungsseite entlastet wird. Die beiden Räder HL (hinten, links) und HR (hinten, rechts) werden hierfür mittels der hydraulischen Kolben/Zylinder-Anordnungen 87 bzw. 87' mittels der Steuereinrichtung 89 wahlweise angehoben.

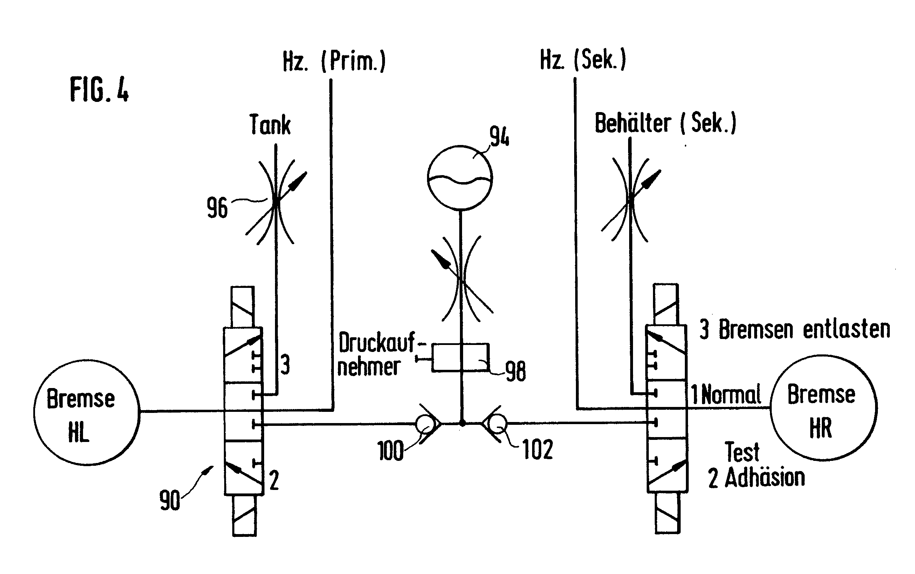

Fig. 4 zeigt ein Block-Diagramm einer Vorrichtung, mit welcher die Reibungskoeffizientenmessung während einer normalen Betriebsbremsung durchgeführt werden kann. Bei diesem Ausführungsbeispiel wird also die Achslast keines Rades vermindert, vielmehr wird der Reibungskoeffizient entsprechend dem anhand Fig. 1 beschriebenen Ausführungsbeispiel ermittelt. Es sind die Bremsen hinten links (HL) und hinten rechts (HR) gezeigt. Die beiden Steuerventile 90, 92 haben drei Stellungen 1, 2 und 3. In der Stellung 1 (Normalstellung) ist die Bremse mit dem Hauptbremszylinder verbunden und die Druckquelle 94 ist gesperrt. Es erfolgt eine normale Bremswirkung. Auch die Tankverbindung 96 ist gesperrt. In der zweiten Stellung (Teststellung) ist die Bremse mit der Druckquelle 94 verbunden und es erfolgt ein gesteuerter Druckanstieg, der durch den Druckaufnehmer 98 überwacht wird. Der Hauptbremszylinder und die Tankanschlüsse sind ebenfalls gesperrt. In einer dritten Stellung (Bremsentlastung) wird die Bremse mit dem Tank durch eine Drossel 96 verbunden. Der Hauptbremszylinder und die Druckquelle 94 sind gesperrt. Die Anschlüsse des Hauptbremszylinders sind mit Hz (Prim. = primärseitig) und Hz (Sek. = sekundärseitig) bezeichnet. Bei der Messung des Reibungskoeffizienten auf der linken Seite ist das linke Steuerventil 90 in Stellung 2, während das rechte Ventil 92 in Stellung 3 ist. Bei einer Messung auf der rechten Seite befindet sich das rechte Ventil 92 in Stellung 3 und das linke Ventil 90 in Stellung 2. Nach dem Test kehrt es in Stellung 3 zurück. Die Rückschlagventile 100, 102 trennen die Hinterachs-Bremskreise (sogenannter X-Split).

**Patentansprüche**

1. Verfahren zum Ermitteln des Reibungskoeffizienten zwischen einem Reifen eines Fahrzeuges und der Fahrbahn, bei dem ein Rad mit einem Bremsdruck abgebremst wird, der größer ist als der an einem anderen Rad wirksame Bremsdruck, und die Drehgeschwindigkeiten des einen und des anderen Rades gemessen und verglichen werden, um den Schlupf zwischen diesen Rädern und daraus den Reibungskoeffizienten zu bestimmen,
dadurch **gekennzeichnet, daß**
  - das eine und das andere Rad jeweils Räder des Fahrzeuges sind,
  - die Achslast am genannten einen Rad gemessen wird, und
  - der Reibungskoeffizient zwischen dem Reifen des genannten einen Rades und der Fahrbahn aus der gemessenen Achslast, dem Bremsdruck am einen Rad und dem ermittelten Schlupf bestimmt wird.

2. Verfahren nach Anspruch 1,
dadurch **gekennzeichnet,**

5

daß nacheinander zumindest zwei Räder des Fahrzeuges, vorzugsweise nicht angetriebene Räder, selektiv abgebremst werden, deren Drehgeschwindigkeit jeweils mit der von zumindest einem anderen, nicht abgebremsten Rad verglichen wird.

3. Verfahren nach Anspruch 1,
dadurch **gekennzeichnet,**
daß die Bremsung am ausgewählten Rad mit einem Bremsdruck und über eine Zeitspanne erfolgt, die so bemessen sind, daß die Geradeausfahrt des Fahrzeuges nicht erheblich gestört wird.

4. Verfahren nach Anspruch 3,
dadurch **gekennzeichnet,**
daß der Bremsdruck und/oder die Brems-Zeitspanne automatisch als Funktion der Fahrzeuggeschwindigkeit variiert werden.

5. Verfahren nach Anspruch 1,
dadurch **gekennzeichnet,**
daß ein Warn-Signal bei Unterschreiten eines vorgegebenen Reibungskoeffizienten abgegeben wird, wobei bei Bestimmung mehrerer Reibungskoeffizienten der kleinste Meßwert herangezogen wird.

6. Verfahren nach Anspruch 1,
dadurch **gekennzeichnet,**
daß ein Warn-Signal bei Überschreiten einer vorgegebenen maximalen Differenz der Reibungskoeffizienten verschiedener Räder abgegeben wird.

7. Verfahren nach Anspruch 1,
dadurch **gekennzeichnet,**
daß aus dem Reibungskoeffizienten und der Fahrzeuggeschwindigkeit ein zu erwartender Bremsweg ermittelt und angezeigt wird.

8. Verfahren nach Anspruch 1,
dadurch **gekennzeichnet,**
daß die Ermittlung des Reibungskoeffizienten durch eine von Hand betätigbare Start-Taste eingeleitet wird.

9. Verfahren nach Anspruch 1,
dadurch **gekennzeichnet,**
daß ein ermittelter maximaler Bremsweg in einer Radarabstandswarnanzeigeeinrichtung verarbeitet wird und bei Unterschreiten eines kritischen Abstands eine Warnung ausgelöst wird.

10. Verfahren nach Anspruch 1,
dadurch **gekennzeichnet,**
daß bei Unterschreiten eines bestimmten Abstandes eine Zwangsbremsung ausgelöst wird.

11. Verfahren nach Anspruch 1,
dadurch **gekennzeichnet,**
daß ab einem bestimmten Lenkwinkeleinschlag ein Auslösen der Meßvorrichtung verhindert wird.

12. Verfahren nach Anspruch 1,
dadurch **gekennzeichnet,**
daß bei Überschreiten einer bestimmten Luftfeuchtigkeit, z.B. 90%, das Meßverfahren automatisch periodisch ausgelöst wird.

13. Verfahren nach Anspruch 1,
dadurch **gekennzeichnet,**
daß bei Unterschreiten einer bestimmten Temperatur, z.B. $+2°$ C, das Meßverfahren automatisch eingeleitet wird.

14. Verfahren zum Ermitteln des Reibungskoeffizienten zwischen einem Fahrzeugreifen und der Fahrbahn, bei dem zumindest ein Fahrzeug-Rad gebremst und zumindest ein anderes Fahrzeug-Rad nicht oder weniger stark gebremst werden und aus einem Vergleich der Drehgeschwindigkeiten dieser Räder ein Schlupf ermittelt wird,
dadurch **gekennzeichnet,**
daß während einer normalen Fahrzeug-Bremsung eines der FahrzeugRäder mit einem geringeren Bremsdruck beaufschlagt wird als ein anderes Fahrzeug-Rad.

**15.** Verfahren nach Anspruch 14,
dadurch **gekennzeichnet,**
daß das mit geringerem Bremsdruck beaufschlagte Fahrzeug-Rad nicht gebremst wird.

**16.** Verfahren nach Anspruch 14,
dadurch **gekennzeichnet,**
daß das mit geringerem Bremsdruck beaufschlagte Fahrzeug-Rad und das mit stärkerem Bremsdruck beaufschlagte Fahrzeug-Rad jeweils nicht angetriebene Räder des Fahrzeuges sind.

**17.** Verfahren nach Anspruch 14,
dadurch **gekennzeichnet,**
daß das mit stärkerem Bremsdruck beaufschlagte Fahrzeug-Rad solange mit steigendem Bremsdruck beaufschlagt wird, bis es einen vorgegebenen Schlupf erreicht hat.

**18.** Verfahren zum Ermitteln des Reibungskoeffizienten zwischen einem Fahrzeugreifen und der Fahrbahn, bei dem zumindest ein Fahrzeug-Rad gebremst und zumindest ein anderes FahrzeugRad nicht oder weniger stark gebremst wird und aus einem Vergleich der Drehgeschwindigkeiten dieser Räder ein Schlupf ermittelt wird,
dadurch **gekennzeichnet,**
daß die Achslast eines Fahrzeug-Rades vermindert wird, daß dieses entlastete Fahrzeug-Rad abgebremst wird und daß dessen Drehgeschwindigkeit mit der Drehgeschwindigkeit zumindest eines anderen, ungebremsten Rades verglichen wird.

**19.** Verfahren nach Anspruch 18,
dadurch **gekennzeichnet,**
daß aus dem ermittelten Reibungskoeffizienten ein Bremsweg errechnet und angezeigt wird.

**20.** Verfahren nach Anspruch 18,
dadurch **gekennzeichnet,**
daß nur dann eines der Fahrzeug-Räder mit geringerem Bremsdruck beaufschlagt oder seine Achslast vermindert wird, wenn der Druck des Hauptbremszylinders einen vorgegebenen Wert, wie z.B. 40 bar, innerhalb einer vorgegebenen Zeitspanne, wie z.B. einer Sekunde, nicht überschreitet.

**21.** Verfahren nach Anspruch 18,
dadurch **gekennzeichnet,**
daß das entlastete Fahrzeug-Rad ein nicht angetriebenes Rad ist.

## Claims

**1.** A method of determining the coefficient of friction between a vehicle tire and the roadway, wherein one wheel is retarded by a brake pressure greater than the brake pressure acting at another wheel and the rotational speeds of the one wheel and of the other wheel are measured and compared so as to determine the slip between these wheels and, on that basis, the coefficient of friction, **characterized** in that
- the one wheel and the other wheel both are wheels of the vehicle,
- the axle load is measured at the one wheel mentioned, and
- the coefficient of friction between the tire of the one wheel mentioned and the roadway is determined on the basis of the axle load measured, the brake pressure at the one wheel, and the slip determined.

**2.** The method as claimed in claim 1, characterized in that at least two wheels of the vehicle, preferably non-driven wheels, are retarded selectively one after the other, and their respective rotational speeds are compared with that of at least one other non-retarded wheel.

3. The method as claimed in claim 1, characterized in that the retardation of the selected wheel is effected at a brake pressure and for a period of time both dimensioned so that the straigt-on travel of the vehicle is not disturbed considerably.

4. The method as claimed in claim 3, characterized in that the brake pressure and/or the braking period are varied automatically as a function of the vehicle speed.

5. The method as claimed in claim 1, characterized in that an alarm signal is given when a predetermined coefficient of friction is failed to be reached, the smallest value measured being drawn upon if a plurality of coefficients of friction are determined.

6. The method as claimed in claim 1, characterized in that an alarm signal is given when a predetermined maximum difference between the coefficients of friction of various wheels is exceeded.

7. The method as claimed in claim 1, characterized in that a stopping distance to be expected is determined from the coefficient of friction and the vehicle speed and is indicated.

8. The method as claimed in claim 1, characterized in that the determination of the coefficient of friction is initiated by a manually operable start button.

9. The method as claimed in claim 1, characterized in that a maximum stopping distance determined is processed in a radar distance warning system and an alarm is released if a critical distance is fallen short of.

10. The method as claimed in claim 1, characterized in that automatic braking is initiated if a certain distance is fallen short of.

11. The method as claimed in claim 1, characterized in that the release of the measuring device is prevented from a certain steering angle on.

12. The method as claimed in claim 1, characterized in that the measuring method is released automatically periodically if a certain humidity of the air, e.g. 90% is exceeded.

13. The method as claimed in claim 1, characterized in that the measuring method is initiated automatically if a certain temperature, e.g. $+2^\circ$ C is fallen short of.

14. A method of determining the coefficient of friction between a vehicle tire and the roadway, wherein at least one vehicle wheel is retarded and at least one other vehicle wheel is not retarded or less so, and slip is determined from a comparison of the rotational speeds of these wheels, **characterized** in that one of the vehicle wheels is pressurized by a lower brake pressure than another vehicle wheel during normal vehicle brake application.

15. The method as claimed in claim 14, characterized in that the vehicle wheel pressurized by the lower brake pressure is not retarded.

16. The method as claimed in claim 14, characterized in that the vehicle wheel pressurized by the lower brake pressure and the vehicle wheel pressurized by the higher brake pressure each are non-driven wheels of the vehicle.

17. The method as claimed in claim 14, characterized in that the vehicle wheel pressurized by the higher brake pressure is exposed to rising brake pressure until it has reached a predetermined slip.

18. A method of determining the coefficient of friction between a vehicle tire and the roadway, wherein at least one vehicle wheel is retarded and at least one other vehicle wheel is not retarded or less so and slip is determined from a comparison of the rotational speeds of these wheels,

characterized in that the axle load of a vehicle wheel is reduced, in that this relieved vehicle wheel is retarded, and in that the rotational speed thereof is compared with the rotational speed of at least one other unretarded wheel.

19. The method as claimed in claim 18, characterized in that a stopping distance is calculated from the coefficient of friction determined and is indicated.

20. The method as claimed in claim 18, characterized in that one of the vehicle wheels is pressurized by lower brake pressure or its axle load reduced only if the master cylinder pressure does not exceed a predetermined value, such as e.g. 40 bars, within a predetermined period of time, such as e.g. one second.

21. The method as claimed in claim 18, characterized in that the relieved vehicle wheel is a non-driven wheel.

**Revendications**

1. Procédé pour déterminer le coefficient de frottement entre un pneumatique d' un véhicule et la chaussée, selon lequel on freine une roue avec une pression de freinage supérieure à la pression de freinage agissant sur une autre roue, on mesure les vitesses de rotation de l'une et de l'autre roue et on les compare afin de déterminer le glissement entre ces roues et, à partir de ce glissement, le coefficient de frottement, caractérisé en ce que
   - l'une et l'autre roues sont des roues du véhicule,
   - on mesure la charge d'essieu sur la roue mentionnée en premier et
   - on détermine le coefficient de frottement entre le pneumatique de la roue mentionnée en premier et la chaussée à partir de la charge d'essieu mesurée, de la pression de freinage sur la roue mentionnée en premier et du glissement déterminé.

2. Procédé selon la revendication 1, caractérisé en ce que l'on freine sélectivement, l'une après l'autre, au moins deux roues du véhicule, de préférence des roues non motrices, et on compare la vitesse de rotation de chacune d'elles avec la vitesse de rotation d'au moins une autre roue non freinée.

3. Procédé selon la revendication 1, caractérisé en ce que l'on effectue le freinage de la roue choisie avec une pression de freinage et pendant une durée qui sont dosées de manière que la marche en ligne droite du véhicule ne soit pas perturbée notablement.

4. Procédé selon la revendication 3, caractérisé en ce que l'on varie la pression de freinage et/ou la durée de freinage de façon automatique en fonction de la vitesse du véhicule.

5. Procédé selon la revendication 1, caractérisé par la délivrance d'un signal d'avertissement lorsque le coefficient de frottement descend au-dessous d'une valeur préfixée, avec utilisation de la valeur mesurée la plus faible en cas de détermination de plusieurs coefficients de frottement.

6. Procédé selon la revendication 1, caractérisé par la délivrance d'un signal d'avertissement en cas de dépassement d'une différence maximale préfixée des coefficients de frottement de plusieurs roues.

7. Procédé selon la revendication 1, caractérisé par la détermination et l'affichage d'une distance de freinage prévisible d' après le coefficient de frottement et la vitesse du véhicule.

8. Procédé selon la revendication 1, caractérisé en ce que la détermination du coefficient de frottement est déclenchée au moyen d'une touche de départ susceptible d'être actionnée manuellement.

9. Procédé selon la revendication 1, caractérisé par l'exploitation d'une distance de freinage maximale déterminée dans un détecteur-avertisseur de distance à radar et par le déclenchement d'un avertissement au cas où la distance déterminée par ce dispositif descend au-dessous d'une distance critique.

10. Procédé selon la revendication 1, caractérisé en ce qu'un freinage imposé est déclenché lorsqu' une distance relevée descend au-dessous d'une distance donnée.

11. Procédé selon la revendication 1, caractérisé en ce qu'un déclenchement du dispositif de mesure est empêché à partir d'un angle de braquage donné.

12. Procédé selon la revendication 1, caractérisé en ce que le processus de mesure est déclenché automatiquement, périodiquement, au cas où l'humidité de l'air dépasse une valeur donnée, de 90% par exemple.

13. Procédé selon la revendication 1, caractérisé en ce que le processus de mesure est déclenché automatiquement lorsque la température descend au-dessous d'une valeur donnée, de $+2°$C par exemple.

14. procédé pour déterminer le coefficient de frottement entre un pneumatique de véhicule et la chaussée, selon lequel on freine au moins une roue du véhicule, on ne freine pas ou on freine moins fortement au moins une autre roue du véhicule et on détermine un glissement à partir d'une comparaison des vitesses de rotation de ces roues, caractérisé en ce que, pendant un freinage normal du véhicule, on applique une pression de freinage plus faible à l'une des roues du véhicule qu'à une autre roue du véhicule.

15. Procédé selon la revendication 14, caractérisé en ce que la roue du véhicule recevant la plus faible pression de freinage n'est pas freinée.

16. Procédé selon la revendication 14, caractérisé en ce que la roue du véhicule recevant la plus faible pression de freinage et la roue du véhicule recevant la pression de freinage plus forte sont des roues non motrices du véhicule.

17. Procédé selon la revendication 14, caractérisé en ce que la roue du véhicule recevant la pression de freinage plus forte est alimentée avec une pression de freinage croissante jusqu'à ce qu'elle présente un glissement préfixé.

18. Procédé pour déterminer le coefficient de frottement entre un pneumatique de véhicule et la chaussée, selon lequel on freine au moins une roue du véhicule, on ne freine pas ou on freine moins fortement au moins une autre roue du véhicule et on détermine un glissement à partir d'une comparaison des vitesses de rotation de ces roues, caractérisé en ce que l'on diminue la charge d'essieu d'une roue du véhicule, que l'on freine cette roue déchargée du véhicule et que l'on compare sa vitesse de rotation avec la vitesse de rotation d'au moins une autre roue non freinée.

19. Procédé selon la revendication 18, caractérisé en ce qu'une distance de freinage est calculée à partir du coefficient de frottement déterminé et que cette distance de freinage est affichée.

20. Procédé selon la revendication 18, caractérisé en ce que l'on applique seulement une pression de freinage réduite à l'une des roues du véhicule, ou on diminue seulement la charge d'essieu d'une roue du véhicule au cas où la pression du maître-cylindre de frein ne dépasse pas une valeur préfixée, de 40 bars par exemple, dans un intervalle de temps préfixé, d'une seconde par exemple.

21. Procédé selon la revendication 18, caractérisé en ce que la roue déchargée du véhicule est une roue non motrice.

# FIG.1

EP 0 201 843 B1

FIG.2

FIG.3

84

85

82

80

86

89

87

87'

HL

HR

FIG. 4

Hz. (Prim.)

Hz. (Sek.)

Tank

Behälter (Sek.)

94

96

Druckaufnehmer

98

3 Bremsen entlasten

Bremse
HL

3

1 Normal

Bremse
HR

100

102

Test
2 Adhäsion

90

2

EP 0 201 843 B1